# EUROPEAN PATENT APPLICATION

(11) **EP 0 953 937 A1**
(43) Date of publication of application: **03.11.1999**
(21) Application number: 98870098.5
(22) Date of filing: 30.04.1998
(51) Int. Cl.: G06K 19/08

(54) **Security element to prevent counterfeiting of value documents**

(71) Applicant: Securency Pty. Ltd., Craigieburn, Victoria 3064 (AU); INNOVATIVE SPUTTERING TECHNOLOGY N.V. (I.S.T.), B-9870 Zulte (BE)
(72) Inventor: Power, Gary, Silloth, Cumbria CA5 4DT (GB); Lippens, Paul, 8610 Kartemark (BE)
(74) Representative: Messely, Marc, Ir.

(57) **Abstract**

The invention relates to a security element comprising a magnetic layer and an embossed layer characterised in that the magnetic layer is a soft-magnetic layer and in that the soft magnetic layer has, at least partially, the shape of the embossed pattern of the embossed layer, whereby the embossed layer affects the magnetic properties of the soft-magnetic layer, to a process of manufacture thereof and to the use of such a security element to avoid counterfeiting of value documents.

## Description

### FIELD OF THE INVENTION

The present invention relates to a security element particularly useful to protect value documents such as bank notes, credit cards, bank cards, cheques or others products of some value, such as software, CD, video-cassettes, perfumes, clothing, and the like. In another of its aspects, the invention relates thus to the protected value document. Finally the invention relates also to a method of manufacturing such a security element.

### DESCRIPTION OF THE BACKGROUND ART AND OBJECT OF THE INVENTION

In recent years, counterfeiting or falsification of value documents including bank notes, debit or credit cards has proliferated. Security systems for incorporation into such value documents involve the incorporation of encoded data, either visibly or invisibly or both, into or on the document substrate and a system for reading out the encoded data to authorise use of the document.

One form of value document can be found in U.S. Patent No. 4,684,795. This value document carries, on at least one of its surfaces, a security feature or element which includes a magnetic layer comprising a dispersion of magnetisable particles in a binder and a security layer which has an optical-diffraction effect, for example a hologram or a computer-generated diffraction layer, an interference layer or a diffraction grating. In that document, the security layer is superimposed on the magnetic layer at least in a region-wise manner thereon, while the surface of the security layer which is towards the magnetic layer has a spatial structure with an optical-diffraction effect. The security layer is further provided with a reflective non-magnetisable metal layer.

However, it has been found that, in some circumstances, the reflective non-magnetisable metal layer can be damaged or changed at least in regard to its appearance. That can adversely affect the proper functioning of the security feature. That becomes apparent in particular when the structure of the security layer, which has an optical-diffraction effect, is a machine-readable structure, for example, a hologram or a computer-generated diffraction structure.

U.S. Patent No. 5,383,687 describes a value document comprising a magnetic layer in combination with a security layer which does not exhibit such drawback. To prevent damage to the reflective metal layer, said metal layer is formed by a metal which does not react with the magnetisable particles of the magnetic layer. In a variant, a barrier layer is disposed between the metal layer and the magnetic layer.

The suitable metal layer can be selected from copper, chromium, silver or gold or at least an alloy thereof. The magnetic particles in the magnetisable layer can be chosen from the group consisting of g-Fe₂O₃ pigments, Co-doped iron oxides or other magnetic materials such as Sr, Ba-ferrite.

Value documents protected as described above, still exhibit several drawbacks. First, they possess an important number of different layers and are thus relatively difficult and expensive to manufacture.

Next, their magnetic layer is always made of hard or semi-hard magnetic material so that the protected documents might interfere with magnetic storage devices such as video-tapes for example.

The security layer with an optical diffraction effect is always connected (e.g. by means of an adhesive) to the magnetic layer. It is thus possible to separate one of these elements from the other and to analyse and reproduce it. The hologram could be easily reproduced by contact or mechanical copying or any other method usually used by counterfeiters.

It is therefore an object of the present invention to provide a security element which does not exhibit such drawbacks.

An object of the invention is to provide a security element in which the anti-counterfeiting properties of a diffraction grating device, like an optically variable device (OVD), more particularly like a hologram are intimately associated with the anti-counterfeiting properties of a soft-magnetic material.

Another object of this invention is to provide a security element in which the diffraction grating device contains also information which could be read by a machine.

Another object of the invention is to provide a security element which is easy to manufacture.

Such a security element would show several advantages: it is very difficult to copy because the absence of one of its components, i.e. the soft-magnetic material element, is readily detected but parts of the information it contains remain unknown from the public. In general, removal of the diffraction grating device means at the same time removal of the magnetic element.

### DESCRIPTION OF THE INVENTION

In accordance with the invention, a soft-magnetic material is used to produce an optical-diffraction effect when directly applied on an embossed surface. The diffraction grating device and the soft-magnetic layer are thus combined into one object.

The term soft-magnetic refers to material having a rather low coercive force, for example a coercive force ranging from 3 A/m (0.037 Oersted) to 500 A/m (6.28 Oersted). Hard or semi-hard magnetic material has a much higher coercive force, for example the coercive force for the semi-hard magnetic material ranges from 2000 A/m (about 25 oersted) to 8000 A/m (about 100 Oersted), and the coercive force for hard magnetic material is higher than 25000 A/m (about 312 Oersted).

A soft-magnetic material only shows magnetic properties when exposed to a magnetic field while hard-magnetic materials show permanent magnetic properties. Surprisingly it has been found that the pattern of the diffraction grating device modifies the signal that can be read from the soft magnetic layer. Such property allows to create specific magnetic response from specific pattern, like a magnetic finger print.

Accordingly, the invention relates to a security element comprising a magnetic layer and an embossed layer characterised in that the magnetic layer is a soft-magnetic layer and in that the soft magnetic layer has, at least partially, the shape of the embossed pattern of the embossed layer, whereby the embossed layer affects the magnetic properties of the soft-magnetic layer.

It is essential to understand that for the embossed layer to affect the magnetic properties of the soft-magnetic layer, the soft-magnetic layer must, at least partially, take the shape of the embossed pattern of the embossed layer. Therefore, the soft magnetic layer may lie directly on the embossed layer or on another layer having the shape of the embossed layer.

The decomposition of such a security element is almost impossible, because of the association of the magnetic alloy layer with the embossed surface. Trying to remove the magnetic alloy layer will damage the embossed pattern, making the reproduction of the diffraction grating device inaccurate and inoperative. On the opposite, counterfeiting a security element using only the diffraction grating device will be inoperative because the absence of the soft-magnetic material could be easily detected.

Optional layers which may be present in the security element which is the object of the present invention are one or more other metallic layers, chosen with a high reflectivity, to enhance the optical aspect of the diffraction grating device. Aluminium is particularly suitable therefor. This optional metallic layer may be applied by any method well-known in the art, such as vacuum metallisation.

It has been observed that the soft-magnetic layer has a relatively weak glossiness. It is therefore of interest to add a metal layer with high specular reflectance. It will be understood that such a glossy layer must be deposited on at least one visible side of the security element.

Therefore, if the substrate to which the security element is to be affixed is opaque, the said metal layer is to be deposited on the embossed layer before the soft-magnetic layer. If, on the contrary, the substrate (or at least the region of the substrate where the security element is to be affixed) is transparent, the metal layer may be deposited on the top of the soft-magnetic layer. In the last case, however, the metal layer could also be deposited before the soft-magnetic layer or on both sides of the soft-magnetic layer.

In a preferred embodiment, the invention relates therefore to such a security element, characterised in that the security element further comprises a metal layer with a high specular reflectance.

Particularly, the invention relates to such a security element in which the metal layer with a high specular reflectance is chosen between aluminium, silver, chromium, gold or any other highly reflective metal layer or metal oxide such as titanium dioxide, niobium dioxide, tin oxide, indium oxide, indium - tin oxide or zinc oxide, preferably aluminium.

Another optional layer consists of an adhesive layer, such as a pressure-sensitive adhesive layer, a contact adhesive layer, a hot melt adhesive layer, a hot stamp adhesive layer or any other kind of adhesive layer. This adhesive layer can be a commercial product like Durasol 326 or its equivalent (Albright and Wilson). This is a methyl methacrylate / butyl acrylate copolymer, in solution in methylethylketone / toluene. The additives present in the adhesive layer include a hot stamping break promoter, like Silica Wacker HDK H15 or Aerosil R971 and an adhesion promoter like the vinyl resin VMCH from Union Carbide.

The adhesive layer can be applied by gravure process or any other coating process known in the art.

The invention also relates to such a security element, characterised in that the security element further comprises an adhesive layer such as a pressure-sensitive adhesive layer, a contact adhesive layer, a hot melt adhesive layer, a hot stamp adhesive layer or any other kind of adhesive layer.

Particularly, the invention relates to such a security element in which the adhesive layer comprises an a,b-ethylenically unsaturated carboxylic acid-based resin to allow the security element to be permanently affixed to the substrate. Obviously other means of fixation of the security element to the substrate are encompassed within the scope of the present invention.

The embossable layer can be made of any embossable coating composition well-known in the art. This coating composition consists usually of thermoplastic polymer of relatively high molecular weight, in the form of a solution in an organic solvent, and of conventional additives such as ultraviolet absorbing compounds, light stabilizers, antioxidants as well as various opacifying pigments such as metal oxides. Once applied on the carrier film surface, the coating undergoes hardening through crosslinking. In a variant, the thermoplastic polymer with a relatively high molecular weight may form a water-borne emulsion. Once applied on the carrier film surface, the coating undergoes hardening through evaporation of water.

Examples of embossable coating compositions contain as binder a mixture of carboxyl group-containing polymers, such as a carboxyl group-containing polyester or polyacrylate, and epoxy compounds, such as triglycidyl group-containing acrylic copolymers or b-hydroxyalkylamides or a mixture of hydroxyl group-containing polymers, most often hydroxyl group-containing polyesters, with blocked or non-blocked isocyanates, melamine resins, and the like.

In a particular embodiment, the invention relates to a security element in which the embossed layer comprises an a,b-ethylenically unsaturated carboxylic acid-based resin. An example of embossable coating composition suitable for the present invention is illustrated as follows: the coating composition can be prepared with commercial products like Paraloid A11 (from Rohm and Haas). This product is an acrylic lacquer dissolved in methylethylketone and toluene. The viscosity of the applied composition can be adjusted if required with isopropanol.

The diffraction grating device used in the present invention can be an holographic image, a computer-generated diffraction structure or any other spatial structure with an optical diffraction effect.

Such diffraction grating device can be obtained by embossing the embossable layer with a hot stamp press like the Milford Astor M50 (single impression machine), with a continuous embossing machine like the CSIRO-RBA-EI, with a high-speed embossing machine like the Rotomec Laminator or with any other machine well-known from the art.

In a preferred mode, the invention relates to a security element in which the diffraction grating pattern is obtained by embossing to form a hologram. The soft-magnetic material consists essentially of a soft-magnetic thin film with an optical reflection high enough (specular reflectivity is typically higher than 45%, by preference 58%) in order to create a diffraction grating device on an embossed surface.

The soft-magnetic material used according to the present invention can be selected from the soft magnetic materials known in the art.

Particularly, soft-magnetic alloys such as the ones mentioned in patent EP 0 295 028 B1, can be used A Co alloy which works excellent is the one used in ATALANTE® soft-magnetic films. ATALANTE® is a trademark of Innovative Sputtering Technology (I.S.T.) N.V., Belgium.

The magnetic material deposited may be a mixture of metallic elements with a suitable glass-forming element or elements. Compositions typical of those currently used to form melt-spun magnetic metallic glasses are suitable. One such composition is Co-Nb with a suitable glass forming element such as Zr. Other suitable amorphous alloys include the transition metal metalloid (T-M) and transition metal transition metal
(T-T) alloys. Typical metalloids in this context are boron, carbon, silicon, phosphorus and germanium, which may form about 15 - 30% of the alloy. T-T alloys contain late transition metals such as Fe, Co, Ni or early transition metals such as Zr and Hf and have good thermal stability. The composition of T-M type alloys amenable to solidification to an amorphous phase is typically around T₈₀M₂₀ e.g. Fe₈₀B₂₀;
By adding Co and Ni to Fe-B systems, an increase in Curie temperature results, with an increase in saturation magnetic induction. The addition of other metalloids also has an effect on material properties such as saturation magnetic induction, Curie temperature anisotropy, magnetisation and coercivity. The most appropriate alloy for any particular application can be selected through consideration of the desired properties.

The preferred alloys are combinations of elements, generally of metal and metalloid elements, which when combined in the correct atomic percentages, give an amorphous structure under the right deposition conditions. Many such alloys contain Co, Fe, Si and B. Ni may also be present. Suitable alloys are amorphous metal glasses, for example: Coₐ Fe_{b} Ni _{c} Mo _{d} Siₑ B_{f} where a is in the range of 35 to 70 atomic percent, b zero to 8 atomic percent, c zero to 40 atomic percent, d zero to four atomic percent, e zero to thirty atomic percent and f zero to thirty atomic percent, with at least one of groups b, c, d and e, f being non zero. The inclusion of nickel is found to assist in increasing the ducitility of the product, which facilitates its handling and usage. Suitable properties may also be achieved with alloys of iron, aluminium and silicon that are designed to have zero magnetostriction. Magnetic properties of some alloys are very sensitive to a change in their stoechiometric composition. Others are magnetostrictive and hence do not possess a sufficiently high permeability. The ratio Co/Fe markedly affects the magnetostrictive properties of the alloy; the atomic ratio Co/Fe is preferably in the range 8:1 to 20:1.

One satisfactory alloy is Co₆₆ Fe₄ Mo₂ Si₁₆ B₁₂. Another may contain manganese in place of molybdenum. A further alloy has the composition Co, 42; Fe, 4; Ni, 28; Si, 16; B, 9 atomic percent.

The invention relates also to a security element in which the soft magnetic layer consists essentially of an alloy containing cobalt and niobium, together with a glass-forming element.

The invention relates also to a security element in which the soft magnetic layer consists essentially of an alloy containing cobalt, iron, silicon and boron, optionally further containing nickel.

In a variant, the invention relates to a security element in which the soft magnetic layer is made of an alloy which has the formula :Coₐ Fe_{b} Ni_{c} Mo_{d} Siₑ B_{f}, where a is in the range of 35 to 70 atomic percent, b zero to 8 atomic percent, c zero to 40 atomic percent, d zero to 4 atomic percent, e zero to 30 atomic percent and f zero to 30 atomic percent, with at least one of the group b,c,d and e,f being non zero.

Particularly, the invention relates also to a security element in which the soft magnetic layer is made of an alloy with a composition (in atomic percent) in the range :Co 35-70, Fe 2-7, Ni 10-35, Mo 0-2, Si 12-20 and B 6-12.

The invention relates also to a method for producing such a security element, comprising the steps of:
a) applying a release coating on a polymeric film carrier
b) applying an embossable layer on the polymeric film which is used as carrier,
c) embossing the embossable layer with an diffraction grating pattern such as a hologram, and
d) applying a soft-magnetic layer on the embossed face of the embossed layer.

Optionally the method comprises further the step of applying an adhesive layer such as a pressure-sensitive adhesive layer, a contact adhesive layer, a hot melt adhesive layer, a hot stamp adhesive layer or any other kind of adhesive layer, on top of the soft-magnetic layer.

Particularly, the invention relates also to a method for producing such a security element, further comprising the step of optionally applying a metal layer with a high specular reflectance. The optional metal layer with a high specular reflectance can be applied on the soft-magnetic layer or under it.

The release coating can be applied on a carrier film (step a)), suitable for further hot stamp process. Such carrier film can be a polyester film, such as polyethylene terephtalate film (Melinex S from ICI Australia, Mylar-A from DuPont) or other carrier films such as Cellophane®.

This release coating composition can be chosen from polymers, waxes, gums, gels and mixtures thereof. This release coating composition can be applied, for example, by a gravure process or any application technique well-known in the art.

The embossable layer can be applied on top of the release coating (step b)) for example, by a gravure process or any application technique well-known in the art.

The deposition technique for the soft-magnetic material can be sputtering e.g. DC magnetron sputtering, electron beam or thermal evaporation (enabling a faster deposition rate but achieving a less dense product) or electrolysis. Another technique is organometallic vapour pyrolysis. Further possibilities include, laser driven physical vapour deposition in which a laser beam is scanned over a target surface to ablate the material to be deposited and deposition from a liquid using a chemical technique.

The preferred deposition technique is DC magnetron sputtering.

As mentioned previously, the soft-magnetic amorphous metal glass thin film coating may be deposited by sputtering electron beam evaporation, or electroless or electrolytic chemical deposition. To achieve the desired magnetic properties, in particular low coercivity for a sputtered film the sputtering pressure is preferably between 0.1 and 10 Pascals of argon, depending on the geometry of the coater and on the composition of the sputtered material. The lower the gas pressure, the denser the sputtered product since the mean free path for the sputtered atoms between target and substrate is reduced.

The targets used for sputter depositing the active magnetic layer are preferably prepared by hot isotactic pressing (H.I.P.) starting from a pre-alloyed gas atomised powder.

The deposition technique for the metal layer with a high specular reflectance may be the same as for the soft-magnetic layer. Preferably, this step is performed in-line with the soft-magnetic layer deposition.

The security element object of the present invention can be utilised with security documents such as banknote and the like, but also with any documents or means of identification for authentication purposes. Such documents or means include credit cards, cheques, bonds or any document where security or authenticity is an issue such as labels.

Therefore, another object of the invention relates to a security document having such a security element.

Particularly, such security document is a bank note, a credit card, a cheque or a label.

The method for manufacturing such a security document comprises the transfer of a security element of this invention onto a substrate for example by hot stamp process (transfer coating).

The substrates which can be used according to the present invention include paper, polyolefin films and polymer films in general, rigid polymer materials, metallic foil and the like. Bioriented polypropylene films are preferred.

The substrate can be a continuous web or sheet of suitable material. The substrate can be clear or opaque.

Furthermore, if necessary, a release film or sheet consisting of a release agent, can cover the adhesive layer.

This laminate comprising the security element according to the invention can be used as an adhesive label which may be affixed to most types of surface.

The following examples are given for the purpose of illustrating the present invention.

### BRIEF DESCRIPTION OF THE DRAWINGS

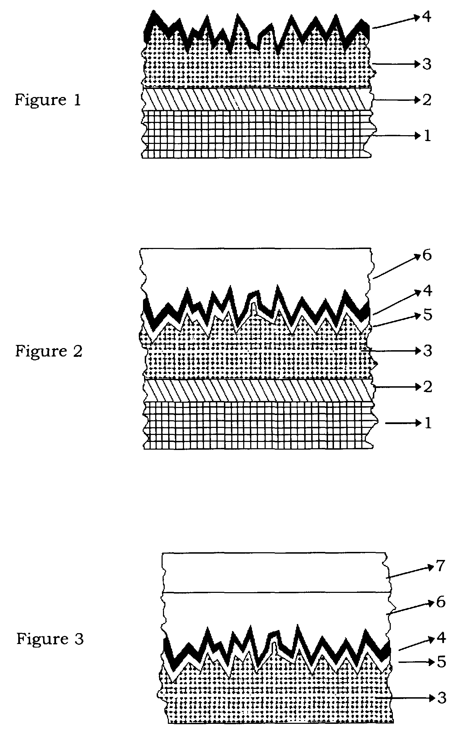

Figure 1, Figure 2 and Figure 3 all show layered structures of security elements according to the present invention. For a better understanding of the present invention, reference will be made to the accompanying drawings, in which
Figure 1 shows a security element object of the present invention, comprising a polymeric film carrier (1), a release coating layer (2), an embossed layer (3) and a soft-magnetic layer (4).
Figure 2 shows the same security element as in Figure 1, but further comprising a metal layer with a high specular reflectance (5) and an adhesive layer (6).
Figure 3 shows a security document after the security element as described in Figure 2 has been transferred by a hot stamp process on a substrate (7).

### Example 1 : Manufacturing of a security element in the form of a label

### Carrier

The carrier for the hot stamp film is Melinex polyester grade S 23 µm thick, from ICI Australia.

### Release coating

The release coating is Carnoba wax and is coated on the carrier film with a gravure coater.

### Embossable layer solution

The embossing layer is prepared from Paraloid A11 from Rohm and Haas. This is an acrylic lacquer supplied as 100% in a granular form. The melting temperature (hot bar) is between 160°C and 170°C. The lacquer solvent is a mixture methylethylketone and toluene. the viscosity modifier is isopropanol.

1 part of Paraloid A11 is added under stirring to 4 parts of toluene, at a temperature of about 50°C. A 20% solids solution is obtained by adding extra toluene after the complete dissolution of the lacquer. The solution is filtered through a glass wool pad and the viscosity is adjusted if required with isopropanol.

### Application of coating

The embossable coating solution is applied by a gravure process with a rotating smoothing bar on the carrier film. The viscosity is adjusted to 22 seconds (measured by No. 2 Zahn cup).

The gravure cylinder engraves mechanically 110 lines per inch and at 50 µm cell depth.

The final weight of coating is around 1.5 ± 0.3 g/m².

The solvent is then removed from the coated film with a good air flow at a temperature of at least 55°C.

### Embossing of hot stamp film

The Paraloid coating on the Melinex is embossed by hot pressing with a modified Rotomec Laminator (410 mm wide). The impression force is about 800 kPa on gauge.

The impression roller hardness is about 85 (shore hardness). The embossing temperature is about 125°C. The pre heat temperature is about 120°C. The chill roll temperature is 10-15°C. The web speed is 30 m/min and the web tension is TBE.

### Soft-magnetic layer

The embossed coated film is metallized with ATALANTE® or any other kind of soft-magnetic alloy generating harmonics of a base-frequency.

The soft-magnetic metal layer is deposited by magnetron sputtering. The thickness can be varied in the range from 150-700 nm.

### Adhesive layer

the coating adhesive is Durasol 326 (Albright and Wilson). This is a methyl methacrylate/butyl acrylate copolymer. The melting temperature is between 120°C and 135°C. The reducing solvent is a mixture of toluene and methylethylketone. The additives include a hot stamping break promoter Silica HDK H15 (Wacker) and an adhesion promoter, the vinyl resin (Union Carbide).

The adhesive solution contains 7% (on solids) of adhesion promoter vinyl resin VMCH and 1% (on solids) of Silica HDK H15. The adhesion promoter is prepared by dissolving the vinyl resin VMCH in methylethylketone solvent to make up a 20% solids solution. The break promoter is made up by mixing the Silica HDK H15 in toluene to a homogenous paste.

The adhesion promoter mix and the break promoter mix are then added to the Durasol 326 with continuous mixing. After the addition is complete, the Durasol 326 is reduced with toluene/methylethylketone 50:50 to the required viscosity and around an 18% solids solution.

### Application of coating

The adhesive coating is applied by gravure process on the top of the soft-magnetic layer.

The viscosity is 22 seconds (No. 2 Zahn cup). The gravure cylinder engraves mechanically at 110 lines/inch and 50 µm cell depth. The final weight of coating is around 1.8 ± 0.2 g/m².

The coating is then dried as completely as possible by heating the web at a temperature of at least 55°C and under an adequate air flow.

### Example 2 : characterisation of the security element

Several security elements were manufactured according to the process described in example 1, and their magnetic properties were tested.

| No. | quality of OVD | Thickness of the soft-magnetic layer (nm) |
|---|---|---|
| 1 | granular, coarse embossing pattern(A) | 170 |
| 2 | | 350 |
| 3 | fine embossing patterns(B and C) | 170 |
| 4 | | 350 |
| 5 | | 285 |
| 6 | | 235 |
| 7 | reference film without embossing | 370 |

The example No. 7 is intended to serve as comparative example only.

In the examples 1 and 2, a coarse embossing pattern A was used while in the examples 3 to 6 two high resolution patterns (B and C) were embossed. The differences of magnetic properties and thus the influence of the embossing patterns on the magnetic signal are clearly illustrated in the following table.

The coercivity and the permeability of the samples were measured at 1 kHz with a magnetometer.

| | No embossing pattern | | Embossing pattern A | | Embossing pattern B | | Embossing pattern C | |
|---|---|---|---|---|---|---|---|---|
| No. | Hc (Oe) | µ | Hc (Oe) | µ | Hc (Oe) | µ | Hc (Oe) | µ |
| 1 | | | > 1 | < 5000 | | | | |
| 2 | | | > 1 | < 5000 | | | | |
| 3 | | | | | > 1 | < 5000 | > 1 | < 5000 |
| 4 | | | | | 0.60 | 8000 | 0.65 | 9000 |
| 5 | | | | | 0.72 | 6000 | 0.76 | 7500 |
| 6 | | | | | > 1 | < 5000 | > 1 | < 5000 |
| 7 | 0.54 | 23000 | | | | | | |

| | | | | | | | | |
|---|---|---|---|---|---|---|---|---|
| µ : magnetic permeability | | | | | | | | |
| Hc : coercivity (measured in Oersted) | | | | | | | | |

From these measures, one can see that:
- the intrinsic magnetic properties like coercivity and permeability are affected by the embossing patterns (compare the permeabilities of examples 1 to 6 with example 7)
- the intrinsic magnetic properties like coercivity and permeability are affected by the type of embossing (compare the coercivities of the embossing patterns B and C).

## Claims

1. A security element comprising a magnetic layer and an embossed layer characterised in that the magnetic layer is a soft-magnetic layer and in that the soft magnetic layer has, at least partially, the shape of the embossed pattern of the embossed layer, whereby the embossed layer affects the magnetic properties of the soft-magnetic layer.

2. A security element according to claim 1, characterised in that the security element further comprises at least a metal layer with a high specular reflectance.

3. A security element according to anyone of claims 1 or 2, characterised in that the metal layer with a high specular reflectance is chosen between aluminium, silver, chromium, gold or any other highly reflective metal layer or metal oxide such as titanium dioxide, niobium dioxide, tin oxide, indium oxide, indium - tin oxide or zinc oxide.

4. A security element according to anyone of claims 1 to 3, characterised in that the metal layer with a high specular reflectance is aluminium.

5. A security element according to anyone of claims 1 to 4, characterised in that the security element further comprises an adhesive layer.

6. A security element according to anyone of claims 1 to 5, characterised in that the adhesive layer consists essentially of an a,b-ethylenically unsaturated carboxylic acid-based resin.

7. A security element according to anyone of claims 1 to 6, characterised in that the embossed layer comprises an a,b-ethylenically unsaturated carboxylic acid-based resin.

8. A security element according to anyone of claims 1 to 7, characterised in that the diffraction grating device is embossed as to form a hologram.

9. A security element according to anyone of claims 1 to 8, characterised in that the soft magnetic layer consists essentially of an alloy containing cobalt and niobium, together with a glass-forming element.

10. A security element according to anyone of claims 1 to 8, characterised in that the soft magnetic layer consists essentially of an alloy containing cobalt, iron, silicon and boron.

11. A security element according to claim 10, characterised in that said alloy contains further nickel.

12. A security element according to claim 10, characterised in that said alloy has the formula
Coₐ Fe_{b} Ni_{c} Mo_{d} Siₑ B_{f}, where a is in the range of 35 to 70 atomic percent, b zero to 8 atomic percent, c zero to 40 atomic percent, d zero to 4 atomic percent, e zero to 30 atomic percent and f zero to 30 atomic percent, with at least one of the group b,c,d and e,f being non zero.

13. A security element according to claim 12, characterised in that said alloy has a composition (in atomic percent) in the range :
Co 35-70, Fe 2-7, Ni 10-35, Mo 0-2, Si 12-20 and B 6-12.

14. A method for producing a security element according to anyone of claim 1 to 13, comprising the steps of :
a) applying a release coating on a polymeric film carrier
b) applying an embossable layer on the polymeric film which is used as carrier,
c) embossing the embossable layer with an diffraction grating pattern such as a hologram, and
d) applying a soft-magnetic layer on the embossed face of the embossed layer.

15. A method for producing a security element according to claim 14, comprising further the step of applying a metal layer with a high specular reflectance under, above or on both sides of the soft-magnetic layer.

16. A method for producing a security element according to claim 14 or 15, comprising further the step of applying an adhesive layer on the top of the different deposited layers.

17. A security document having a security element according to anyone of claims 1 to 13.

18. A security document according to claim 17, characterised in that such security document is a bank note, a credit card or a cheque.

19. A security document according to claim 17, characterised in that such security document is a label.

20. A method for the manufacture of a security document having a security element comprising the step of affixing a security element according to anyone of claims 1 to 13 to a substrate.

21. A method according to claim 20 characterised in that the security element is affixed to the substrate on an essentially clear region thereof.
